# EUROPÄISCHE PATENTSCHRIFT

(11) **EP 0 655 609 B1**
(45) Veröffentlichungstag und Bekanntmachung des Hinweises auf die Patenterteilung: **08.04.1998**
(21) Anmeldenummer: 94117639.8
(22) Anmeldetag: 09.11.1994
(51) Int. Cl.: G01D 11/24, G01P 1/02

(54) **Gehäuse für Messwertgeber**
Sensor housing
Boîtier d'un capteur

(30) Priorität: 25.11.1993 DE 4340177
(43) Veröffentlichungstag der Anmeldung: 31.05.1995
(73) Patentinhaber: Mannesmann VDO AG, 60326 Frankfurt (DE)
(72) Erfinder: Busse, Andrea, Dipl.-Ing., D-78052 Villingen-Schwennigen (DE); Hautvast, Heinz-Josef, Dipl.-Ing. (FH), D-78086 Brigachtal (DE); Hauser, Martin, D-78078 Kappel (DE)

(56) Entgegenhaltungen:
- EP-A- 0 176 644
- DE-A- 3 827 937
- FR-A- 2 683 315
- US-A- 4 680 543

## Beschreibung

Die Erfindung betrifft einen Meßwertgeber mit einem zweiteiligen, insbesondere stabförmigen Gehäuse, dessen einer Gehäuseteil als eine im wesentlichen zylindrische Schutzhülse und dessen anderer Gehäuseteil als Kabelhalter oder Steckersockel sowie als Träger der Funktionselemente des Meßwertgebers ausgebildet ist, von denen der eigentliche Sensor nach dem Zusammenfügen der Gehäuseteile in unmittelbarer Nähe der Stirnwand der Schutzhülse angeordnet ist.

Bei Maschinen und Fahrzeugen werden für das Erkennen und Erfassen von Drehbewegungen in der Regel stabförmige Induktionsgeber oder Magnetfeldgeber verwendet, die zur Signalerzeugung mit geeigneten, mit dem Meßobjekt verbundenen ferro-magnetischen Taktscheiben oder Zahnrädern zusammenwirken. Die Zuordnung der Meßwertgeber bzw. der sensierenden Elemente zu den abzutastenden Taktscheiben oder Zahnrädern erfolgt durch Einschrauben der Gebergehäuse in das betreffende Lager oder Getriebegehäuse oder durch Einstecken und seitliches Anschrauben, was zwingend erforderlich ist, wenn der Sensor des Meßwertgebers in einer bestimmten Ausrichtung zur Laufrichtung des abzutastenden Bauteils eingebaut sein muß, wie z.B. ein Differential-Hall-Generator.

Das herrschende Einsatzmilieu mit aggressiven Medien, hoher Schwingungsbelastung und einem Temperaturgang zwischen -40^{o}C und +150^{o}C erfordern für derartige Meßwertgeber eine optimale Anpassung nicht nur der Funktionselemente, sondern auch der Anschlußtechnik und des Gehäuseaufbaus. Darüber hinaus stellen derartige Meßwertgeber Massenprodukte dar, so daß deren Aufbau auch für die Serienfertigung optimiert sein muß.

Bei bekannten Gehäusearchitekturen, wie bekannt aus DE-A-3827937, werden für die verschiedenen Räume, in denen sich der Meßwertgeber befindet, d.h. außerhalb und innerhalb eines Getriebegehäuses, unterschiedliche Materialien verwendet, womit unterschiedliche Temperaturdehnungen in Kauf genommen werden müssen. Insbesondere an der Verbindungsstelle der Gehäuseteile ist demzufolge der Aufwand für eine sichere Abdichtung eines derartigen Gebers erheblich, d.h. der Bauteilebedarf ist erhöht und die Verbindungstechnik, beispielsweise ein Verbördeln der beiden Gehäuseteile unter Zwischenlage eines O-Ringes, wenig seriengerecht. Um das Dichtheitsrisiko auszuschalten, wird vielfach der gesamte Geber mit einem Gießharz aufgefüllt, was einen hohen Bedarf an der betreffenden ggf. teuren und nicht recyclingfähigen Vergußmasse bedeutet. Vielfach werden beispielsweise für das Festlegen des Kabels bzw. der vereinzelten Leitungen und dem Vergießen des Geberkopfes verschiedene und unterschiedlich aushärtende Vergußmassen verwendet. Außerdem erfordern unterschiedliche Gehäuseteile, in dem geschilderten Falle eine Schutzhülse aus Metall und einen Kabelhalter bzw. Steckersockel aus Kunststoff, jeweils eine unterschiedliche Herstelltechnik, was zusätzlich zur Verteuerung eines derartigen Meßwertgebers beiträgt.

Die Aufgabe der vorliegenden Erfindung war es demnach, einen Meßwertgeber gemäß dem Gattungsbegriff derart auszubilden, daß er den Bedingungen der Großserienfertigung entspricht, ggf. mechanisch montiert werden kann und gegenüber bekannten Meßwertgebern bei zufriedenstellender Funktionalität mit erheblich geringeren Kosten herstellbar ist.

Die Lösung der Aufgabe beschreiben insbesondere der Sachanspruch 1 und der Verfahrensanspruch 2.

Einer der Vorteile, den die Erfindung bietet ist darin zu sehen, daß beide Gehäuseteile, die Schutzhülse und der Steckersockel bzw. der Kabelhalter aus ein und demselben Kunststoff gefertigt sind und die dem Zusammenfügen der beiden Gehäuseteile dienende zylindrische Schnappverbindung unmittelbar an den Gehäuseteilen angeformt ist. Dadurch lassen sich die Schutzhülse und der Steckersockel bzw. der Kabelhalter einfach, letzten Endes werkzeuglos und schnell zusammenfügen, andererseits aber auch mit einem Werkstoff, der eine gute Kapillarwirkung zeigt, wirkungsvoll abdichten. Einen solchen Werkstoff stellt eine Vergußmasse mit dem Handelsnamen Bectron PK 4342, ein Polyurethan-Kunstharz dar.

Diese Vergußmasse und die Art und Weise ihrer Anwendung bieten einen weiteren Vorteil insofern, als nur relativ wenig Vergußmasse erforderlich ist, um einerseits die Funktionselemente des Meßwertgebers in dessen Kopfbereich schwingungssicher zu haltern, andererseits die zylindrische Schnappverbindung und die Spalte, an den durch die Trennwand des Kabelhalters oder Steckersockels geführten Leitungen bzw. Kontakte abzudichten. Dieselbe Vergußmasse ist auch für das Fixieren und das unzugänglich Abdecken der in dem Kabelhalter vereinzelten Leitungen des zugeführten Kabels verwendbar. Das heißt, es wird nur eine Vergußmasse verwendet, und es ist nur ein Aushärtevorgang für verschiedene und in bezug auf den Geber räumlich getrennte Abdichtungs- und Einbettungsstellen erforderlich.

Die Erfindung ermöglicht somit eine besonders vorteilhafte Herstellung des Meßwertgebers, indem als Gehäusebauteile ausschließlich Spritzgußteile vorgesehen sind, die ohne zusätzliche Bauteile durch Zusammenschnappen miteinander verbunden werden. Für die nachfolgende Abdichtung der Spalte und Fixierung der Funktionselemente ist gemäß dem vorgesehenen Verfahren nur eine relativ kleine Menge einer einzigen Vergußmasse erforderlich. Die Montage ist somit weitgehend vereinfacht und der Werkstoffbedarf auf ein Minimum reduziert.

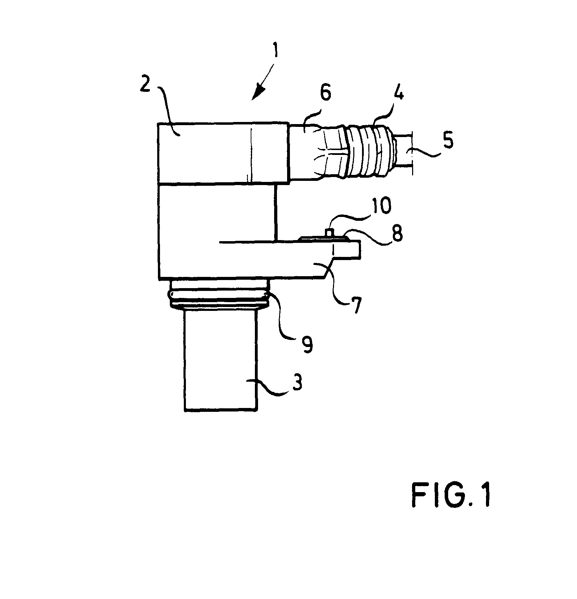

Im folgenden sei die Erfindung anhand der beigefügten Zeichnungen eines Meßwertgebers mit einem als Kabelhalter ausgebildeten einen Gehäuseteil näher erläutert.
Es zeigen Fig. 1 eine Ansicht des einbaufertig montierten Meßwertgebers,
Fig. 2 Schnittdarstellungen der beiden Gehäuseteile des Meßwertgebers im Augenblick des Zusammenfügens,
Fig. 3 eine Draufsicht des Meßwertgebers im einbaufertigen Zustand.

Die als Übersichtsdarstellung gedachte Ansicht des Meßwertgebers 1 gemäß Fig. 1 zeigt den Kabelhalter 2 und die Schutzhülse 3 einbaufertig zusammengefügt. Bei dem angeschlossenen Kabel handelt es sich um ein mittels eines Wellrohres 4 gepanzertes Kabel 5. Eine mit dem Wellrohr 4 verquetschte Hülse 6 dient als Kupplungselement, welches mit dem Kabelhalter 2 über eine Schnappverbindung verbunden ist. An der Schutzhülse 3 ist bei dem dargestellten Ausführungsbeispiel ein Arm 7 ausgebildet, in welchem eine mit einer Durchgangsbohrung versehene Buchse 8 eingepreßt ist. Der Arm 7 dient der Befestigung des Meßwertgebers 1 an beispielsweise einem Getriebegehäuse, in welches die Schutzhülse 3 durch eine geeignete Öffnung hineinragt. Dabei dient ein O-Ring 9 als Abdichtung zwischen dem Getriebegehäuse und der Schutzhülse 3. Eine Öse 10 ist für die Plombierung der Befestigungsschraube vorgesehen.

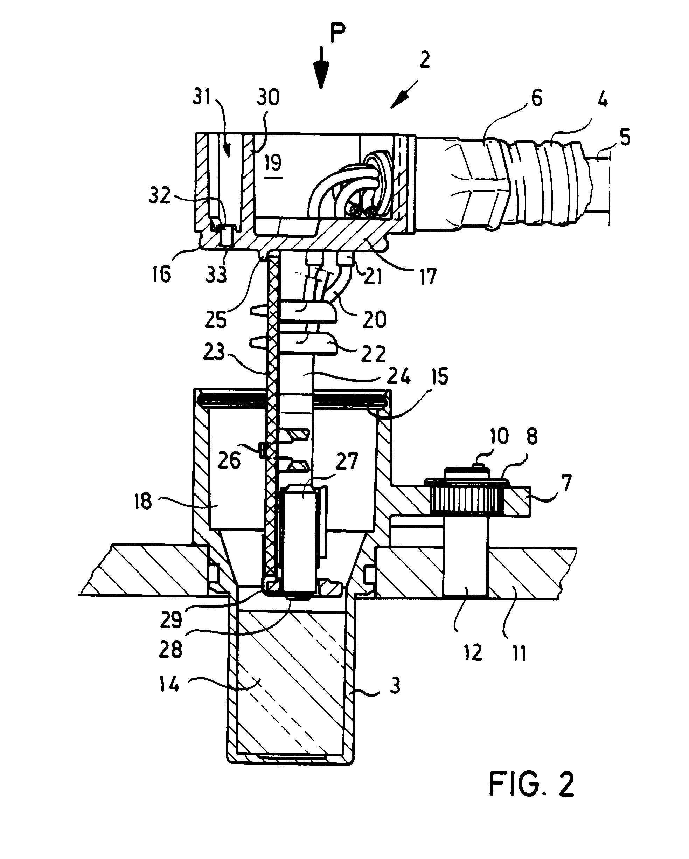

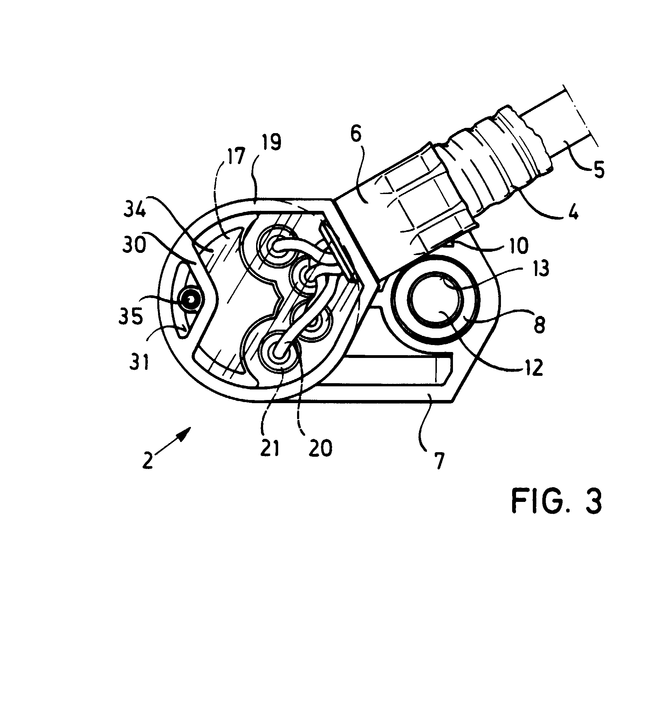

Mit der Schnittdarstellung Fig. 2 ist ein Montageaugenblick während des Zusammenfügens von Kabelhalter 2 und Schutzhülse 3 festgehalten. Zuvor wurde die Schutzhülse 3 in einer Vorrichtung, im einfachsten Falle in einer Platte 11, aufgenommen mittels eines in der Platte 11 eingepreßten Stiftes 12, dessen Durchmesser dem Durchmesser der Durchgangsbohrung 13 (Fig. 3) in der Buchse 8 entspricht, ausgerichtet und bis zu dem erforderlichen Niveau mit Vergußmasse 14 aufgefüllt. Zum Zwecke einer rationellen Montage ist die Vorrichtung für ein Haltern einer Vielzahl von Schutzhülsen ausgebildet, wobei die Unterbringung der an den Kabelhaltern 2 befestigten gepanzerten Kabeln 4, 5 die Anzahl der Montageplätze in der Vorrichtung begrenzt. Dieses Problem ist andererseits dann nicht gegeben, wenn der Meßwertgeber 1 nicht fest verkabelt, sondern mit einem Steckersockel ausgerüstet ist.

An dem Kabelhalter 2 und an der Schutzhülse 3, die beide spritzgußtechnisch hergestellt sind, sind Mittel angeformt, die eine zylindrische Schnappverbindung 15, 16 bilden und die, wie aus der Fig. 2 ferner ersichtlich ist, durch Aufstecken des Kabelhalters 2 auf die Schutzhülse 3 in Pfeilrichtung P in Eingriff gebracht werden. Danach schließt eine an dem Kabelhalter 2 ausgebildete Trennwand 17 den Innenraum 18 der Schutzhülse 3 nach außen ab.

Im folgenden sei, bevor die Beschreibung des Montageverfahrens des Meßwertgebers abgeschlossen wird, der Aufbau des Kabelhalters 2 kurz skizziert. An der einen Seite der Trennwand 17 ist ein Topf 19 angeformt, innerhalb dessen die Leitungen des Kabels 5, von denen eine mit 20 bezeichnet ist, auf Durchführungsöffnungen in der Trennwand 17 verteilt sind. Die Leitungen 20, denen in die Trennwand 17 eingesetzte Dichtungstüllen 21 zugeordnet sind, sind über Schneidkontakte 22 mit Leiterbahnen einer Leiterplatte 23 kontaktiert, die an dem Kabelhalter 2 befestigt ist. Dabei dient ein Rahmen, dessen einer Schenkel mit 24 bezeichnet ist, der Leiterplatte 23 als Auflage, während eine Zunge 25 und Riegel 26 vorgesehen sind, um die Leiterplatte 23 festzuhalten. Mit 27 ist ein Permanentmagnet bezeichnet, welcher in einer nicht näher bezeichneten Fassung, die ebenfalls an dem Rahmen angeformt ist, verschiebbar gehaltert ist. An der Stirnseite des Permanentmagneten 27 ist ein Hall-Generator 28 befestigt, dessen Leitungen 29 auf der Leiterplatte 23 verlötet sind. Eine dem Topf 19 zugeordnete Wand 30 bildet mit der Außenwand des Topfes 19 eine Tasche 31, an deren Grund und somit in der Trennwand 17 eine mit einer dünnen Membran 33 abgeschlossene Bohrung 32 ausgebildet ist.

Nachdem der eine funktionsfertig vormontierte Baueinheit darstellende Kabelhalter 2 mit der Schutzhülse 3 verrastet ist, wird die Vorrichtung 11 gewendet derart, daß die Vergußmasse 14 auch die Trennwand 17 benetzt und durch Kapillarwirkung in der vorhandenen Spalte der Leitungsdurchführungen und in den Ringspalt der Schnappverbindung 15, 16 eindringt. Nach ca. 2 Minuten kann die Vorrichtung 11 wieder zurückgekippt werden. Während sich die Vergußmasse 14 bzw. ein noch frei beweglicher und nicht durch Adhäsion an der Trennwand 17 und an der Wand 30 der Schutzhülse 3 bzw. dem in die Schutzhülse 3 eingreifenden Teil des Kabelhalters 2 haftender Teil der Vergußmasse 14 im Kopf des Meßwertgebers 1 sammelt und einen Teil der Leiterplatte 23, den Permanentmagneten 27 und den Hall-Generator 28 einbettet, wird der Topf 19 ebenfalls und zwar mit derselben Vergußmasse 34 gefüllt. Diese dichtet einerseits die Leitungsdurchführungen durch die Trennwand 17 von außen her ab und bietet gleichzeitig eine Zugentlastung für das Kabel 5 sowie eine Fixierung für die in dem Kabelhalter 2 eingeschnappte Hülse 6 und somit für das Wellrohr 4. Ein Eindringen von Vergußmasse in den Spalt zwischen dem Kabel 5 und der Hülse 6 bzw. dem Wellrohr 4 ist unschädlich, da die Vergußmasse 34 auch nach dem Aushärten gummielastisch ist.

Das Aushärten der vorgesehenen Vergußmasse erfordert eine Mindesttemperatur von 80^{o}C und bei dieser Temperatur eine Einwirkungsdauer von mindestens 60 Minuten. Bei der nachfolgenden Dichtheitsprüfung wird die durch die Tasche 31 zugängliche Membran 33 durchstoßen und der Innenraum 18 der Schutzhülse 3 mit einem erhöhten Druck beaufschlagt. Wird kein Druckabfall festgestellt, ist der Geber dicht, und der Durchstich wird durch Einpressen eines Stiftes 35 in die Bohrung 32 verschlossen.

## Patentansprüche

1. Meßwertgeber mit einem zweiteiligen, insbesondere stabförmigen Gehäuse, dessen einer Gehäuseteil (3) als eine im wesentlichen zylindrische Schutzhülse und dessen anderer Gehäuseteil (2) als Kabelhalter oder Steckersockel sowie als Träger der Funktionselemente des Meßwertgebers ausgebildet ist, von denen der eigentliche Sensor (28) nach dem Zusammenfügen der Gehäuseteile in unmittelbarer Nähe der Stirnwand der Schutzhülse angeordnet ist,
dadurch gekennzeichnet,
daß beide Gehäuseteile als Kunststoffspritzgußteile ausgebildet sind,
daß an den Gehäuseteilen Mittel einer zylindrischen Schnappverbindung (15, 16) angeformt sind,
daß an dem Steckersockel oder Kabelhalter (2) eine Trennwand (17) quer zur Geberachse mit Öffnungen zum Durchführen von Kontakten oder Leitungen (20) ausgebildet ist und
daß zum Fixieren der Funktionselemente (23, 27, 28), zum Abdichten der Leitungs- oder Kontaktdurchführungen und der Schnappverbindung (15, 16) eine einzige aushärtbare Vergußmasse (14, 34) Anwendung findet.

2. Verfahren zum Montieren eines stabförmigen Meßwertgebers nach Anspruch 1,
dadurch gekennzeichnet,
daß die in einer Vorrichtung (11, 12) aufgenommene Schutzhülse (3) teilweise mit der Vergußmasse (14) gefüllt wird,
daß der vormontierte Kabelhalter (2) bzw. Steckersockel in die Schutzhülse (3) eingeführt und die Schnappverbindungsmittel (15, 16) in Eingriff gebracht werden,
daß der Meßwertgeber (1) in Achsebene um 180° gewendet und nach einer gewissen Zeit zurückgekippt wird,
daß ein am Kabelhalter (2) bzw. Steckersockel ausgebildeter, dem Verteilen der Leitungen (20) bzw. dem Einführen eines Steckers dienender Raum (Topf 19) mehr oder weniger mit Vergußmasse (34) gefüllt wird und
daß der Meßwertgeber (1) zur Aushärtung der Vergußmasse (14, 34) einer Warmbehandlung zugeführt wird.

3. Verfahren nach Anspruch 2,
dadurch gekennzeichnet,
daß nach dem Aushärtevorgang eine in der Trennwand (17) ausgebildete Membran (33) durchstoßen wird,
daß der Raum (18) zwischen der Trennwand (17) und der Schutzhülse (3) unter Druck gesetzt und auf Dichtheit geprüft wird und
daß die Durchstoßstelle durch Verstiften abgedichtet wird.

## Claims

1. Measurement transducer having a two-part, in particular bar-shaped, housing, of which one housing part (3) is constructed as a substantially cylindrical protective sleeve and of which the other housing part (2) is constructed as a cable holder or plug socket as well as a carrier for the functional elements of the measurement transducer, the actual sensor (28) of which housing parts is arranged in the immediate vicinity of the end wall of the protective sleeve after the housing parts have been joined together,
characterised
in that both housing parts are constructed as plastic injection-moulded parts,
in that means of a cylindrical snap connection (15, 16) are moulded onto the housing parts,
in that a partition wall (17) is formed on the plug socket or cable holder (2) transversely to the transducer axis and has openings for feeding through contacts or leads (20), and
in that a single curable casting compound (14, 34) is employed to fix the functional elements (23, 27, 28) and to seal off the lead or contact feedthroughs and the snap connection (15, 16).

2. Method for assembling a bar-shaped measurement transducer according to Claim 1,
characterised
in that the protective sleeve (3) located in a device (11, 12) is partially filled with the casting compound (14),
in that the preassembled cable holder (2) or plug socket is introduced into the protective sleeve (3) and the snap-connection means (15, 16) are brought into engagement,
in that the measurement transducer (1) is turned through 180° in the axial plane and turned back after a certain time,
in that a space (pot 19), which is formed on the cable holder (2) or plug socket and serves for the distribution of the leads (20) or the introduction of a plug, is filled to a greater or lesser extent with casting compound (34), and
in that the measurement transducer (1) is subjected to a heat treatment for the curing of the casting compound (14, 34).

3. Method according to Claim 2,
characterised
in that a membrane (33) formed in the partition wall (17) is pierced after the curing process,
in that the space (18) between the partition wall (17) and the protective sleeve (3) is put under pressure and is tested for leaktightness, and
in that the point which has been pierced is sealed off by means of a pin.

## Revendications

1. Transmetteur de paramètres de mesure avec un boîtier en deux parties, plus particulièrement en forme de bâtonnet dont l'une des parties de boîtier (3) est réalisée comme gaine de protection, pour l'essentiel cylindrique, et l'autre des parties de boîtier (2) comme support de câble ou socle de connecteur ainsi que comme support des éléments fonctionnels du transmetteur de paramètres de mesure, dont le capteur (1) proprement dit est disposé, après l'assemblage des parties de boîtier, à proximité immédiate de la paroi frontale de la gaine de protection,
caractérisé par le fait
que les deux parties de boîtier sont réalisées comme pièces de moulage par injection,
que sur lesdites parties de boîtier sont moulés des moyens d'un assemblage à enclenchement cylindrique (15, 16),
que sur le socle de connecteur ou support de câble (2) est formée une paroi de séparation (17) transversalement par rapport à l'axe de transmetteur avec des ouvertures pour le passage de contacts ou conducteurs (20) et
que pour la fixation des éléments fonctionnels (23, 27, 28), pour l'étanchéification des traversées de conducteurs ou contacts et de l'assemblage à enclenchement (15, 16) est mise en oeuvre une seule masse de remplissage (14, 34) durcissable.

2. Procédé pour le montage d'un transmetteur de paramètres de mesure en forme de bâtonnet selon la revendication 1,
caractérisé par le fait
que la gaine de protection (3) logée dans un dispositif (11, 12) sera partiellement remplie avec la masse de remplissage (14),
que le support de câble (2) ou socle de connecteur prémonté sera introduit dans la gaine de protection (3) et les moyens d'assemblage à enclenchement (15, 16) seront amenés en engagement,
que le transmetteur de paramètres de mesure (1) sera pivoté de 180° dans le plan de l'axe et rebasculé après un certain temps,
qu'un espace (pot 19) ménagé sur le support de câble (2) ou le socle de connecteur et servant à la distribution des conducteurs (20) ou à l'introduction d'un connecteur sera plus ou moins rempli avec la masse de remplissage (34) et que le transmetteur de paramètres de mesure (1) sera soumis à un traitement thermique pour le durcissement de la masse de remplissage (14, 34).

3. Procédé selon la revendication 2,
caractérisé par le fait
que, après le processus de durcissement, une membrane (33) formée dans la paroi de séparation (17) sera perforée,
que l'espace (18) entre la paroi de séparation (17) et la gaine de protection (3) sera mis sous pression aux fins d'un contrôle d'étanchéité et
que l'endroit de perforation sera colmaté par goupillage.
